# EUROPEAN PATENT SPECIFICATION

(11) **EP 2 961 124 B1**
(45) Date of publication and mention of the grant of the patent: **21.03.2018**
(21) Application number: 14305975.6
(22) Date of filing: 23.06.2014
(51) Int. Cl.: H04L 29/06, H04L 29/08

(54) **Method for enhancing captive portal service**
Verfahren zur Verbesserung eines Captive-Portal-Dienstes
Procédé d'amélioration de service de portail captif

(43) Date of publication of application: 30.12.2015
(73) Proprietor: Alcatel Lucent, 92100 Boulogne-Billancourt (FR)
(72) Inventor: Prasad, Nagendra, 560045 BANGALORE (IN)
(74) Representative: Mouney, Jérôme

(56) References cited:
- EP-A1- 1 705 869
- US-A1- 2002 112 155
- Anonymous: "Pull technology - Wikipedia, the free encyclopedia", , 18 January 2014 (2014-01-18), page 1, XP055293290, Wikipedia Retrieved from the Internet: URL:https://en.wikipedia.org/w/index.php?t itle=Pull_technology&oldid=591325877 [retrieved on 2016-08-03]

## Description

### FIELD OF THE INVENTION

The present invention pertains to a method for enhancing captive portal service provided by a control entity to a communication device.

### BACKGROUND

Captive portal is a web based authentication mechanism which is enforced on the user who is classified into an edge profile for which the captive portal is enabled.

As of now upon captive portal successful authentication the status page is displayed indicating that login is successful and the pending session time and the logout button. After successful authentication the MAC (Media Access Control) of the user will be associated with a role (the access privileges) that offers him/her unrestricted access to the resource.

Based on different events and configurations of the control device managing the captive portal, the role assigned to the user can be changed.

Currently, user is unaware of the change in his/her access privileges unless he/she is browsing the web. Application EP1705869 and US2002112155 are further prior art documents that discuss a captive portal system sending an authentication cookie in the status page. The authentication cookie is only used for automatically re-authenticating the user at the captive portal. Therefore, there is a need for a simple solution to help the user to know his/her current access privileges.

### SUMMARY

This summary is provided to introduce concepts related to the present inventive subject matter. This summary is not intended to identify essential features of the claimed subject matter nor is it intended for use in determining or limiting the scope of the claimed subject matter. The invention is defined by the independent claims. In accordance with one embodiment, a method is provided for enhancing a captive portal service provided by a control entity to a communication device, comprising the following steps in the control entity:
after authentication of a user of the communication device, sending a status page about the captive portal to the communication device, the status page containing a user role defining user access privileges and a cookie that commands a browser in the communication device to make at least one request for updated user role,
receiving a request from the communication device,
sending a response to the received request with updated user role to the communication device.

Advantageously, the user is caught an aware by the change in the access privileges which are enforced by the control device managing the captive portal. The end user at any point of time can know the changes in the privileges.

In an embodiment, the request is destined to a unique IP address and the control entity has the capability to trap any HTTP packet destined to this unique IP address.

In an embodiment, the response contains information about a remediation process, if the user is quarantined.

In an embodiment, the response contains information about restrictions that pertains to the updated user role and that can be shared with the user, if the user is in restricted role due to a time policy.

In an embodiment, the response contains information about restrictions that pertains to the updated user role and that can be shared with the user, if the user is in restricted role due to a location policy.

In an embodiment, the cookie commands the browser in the communication device to make periodic requests for updated user role.

The invention also pertains to a server for control entity for enhancing a captive portal service provided by the control entity to a communication device, comprising:
means for sending, after authentication of a user of the communication device, a status page about the captive portal to the communication device, the status page containing a user role defining user access privileges and a cookie that commands a browser in the communication device to make at least one request for updated user role,
means for receiving a request from the communication device,
means for sending a response to the received request with updated user role to the communication device.

The invention also pertains to computer program capable of being implemented within a control entity, said program comprising instructions which, when the program is executed within said control entity, carry out steps according to the method according to the invention.

### BRIEF DESCRIPTION OF THE FIGURES

Some embodiments of the present invention are now described, by way of example only, and with reference to the accompanying drawings. The same reference number represents the same element or the same type of element on all drawings.
FIG. 1 is a schematic block diagram of a communication system according to one embodiment of the invention for enhancing captive portal service.
FIG. 2 is a flow chart illustrating a method for enhancing captive portal service according to one embodiment of the invention.

The same reference number represents the same element or the same type of element on all drawings.

### DESCRIPTION OF EMBODIMENTS

The figures and the following description illustrate specific exemplary embodiments of the invention. It will thus be appreciated that those skilled in the art will be able to devise various arrangements that, although not explicitly described or shown herein, embody the principles of the invention and are included within the scope of the invention. Furthermore, any examples described herein are intended to aid in understanding the principles of the invention, and are to be construed as being without limitation to such specifically recited examples and conditions. As a result, the invention is not limited to the specific embodiments or examples described below, but by the claims and their equivalents.

According to an illustrative example of prior art, the user has undergone captive portal authentication successfully at 12 noon. The user is assigned wider access privileges for the captive portal session time out value which is 12 hours. There is another policy (Time Based Policy) configured on the device such that the user should be put in a restricted role at 5 PM.

The user tries to download a file from a server at 6 PM. As the user is in restricted role, the download fails. The user is in doubt what has triggered this failure despite having logged in successfully and having sufficient pending session time.

The only way the user can come to know that time based policy has triggered and he/she is put in the restricted role is by accessing some URL (Uniform Resource Locator) through the browser. When the user accesses the URL, due to the restricted role, HTTP (HyperText Transfer Protocol) request is responded with HTTP reply containing the web page carrying the message that user is under restricted role.

There could be many events that could change role assigned to the user based on the configurations or through different events triggered in the network or based on the change in the location.

In order to overcome at least partially the aforementioned drawbacks, the invention has for object is a dynamic update of the role assigned to the user by the control entity, so that the user is not caught unaware.

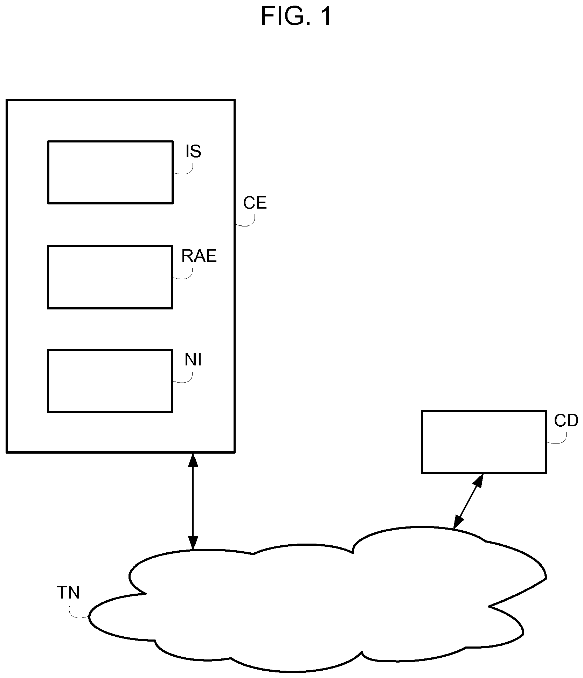

Referring to FIG. 1, a communication system comprises a control entity CE and a communication device CD which are able to communicate between them through at least a telecommunication network TN.

The telecommunication network TN may be a wired or wireless network, or a combination of wired and wireless networks.

The telecommunication network TN can be associated with a packet network, for example, an IP ("Internet Protocol") high-speed network such as the Internet or an intranet, or even a company-specific private network.

The communication device CD can be a personal computer or a laptop, a tablet, a smart phone, a phablet, for instance. More generally it concerns any type of electronic equipment comprising a communication module, capable of establishing connection with the telecommunication network to exchange data with other communication equipments.

The control entity CE is a network entity that is able to communicate with the communication device CD and that allows access to a service, like access to Internet, requiring user authentication. The control entity CE manages a database containing user identifiers and user profiles. For example, the control entity can be implemented in a server or router or switch.

The control entity CE comprises a network interface NI to communicate with the communication device, an authentication server, like a Radius Server, an intranet server and servers in the network.

The control entity CE comprises role assignment engine RAE that implements a captive portal technique that forces an HTTP client to see a special web page, for authentication purposes.

The control entity CE comprises an internal server IS that manages URLs requested by devices communicating with the control entity.

In one embodiment, the internal server IS is implemented in an entity independent from the control entity CE.

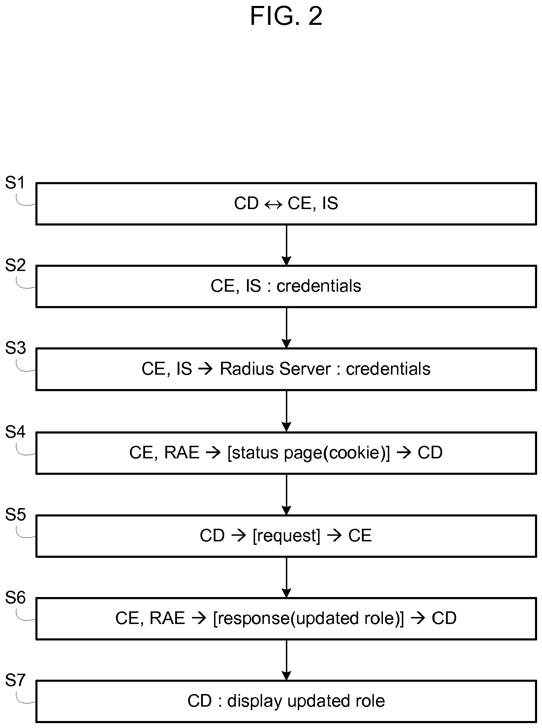

With reference to FIG. 2, a method for handling passwords for service authentication according to one embodiment of the invention comprises steps S1 to S7 executed within the communication system.

In step S1, the user of the communication device CD connects to the control entity CE in order to get access to Internet, to a web site for example.

When the user opens a web browser trying to access a web site, the role assignment engine RAE of the control entity CE triggers a captive portal pre-login role that traps packets, such as HTTP/HTTPS/HTTP PROXY packets, into an internal server IS.

The user is classified in an edge profile for which captive portal property is enabled. The user's MAC address is learnt with captive portal pre-login role (restricted access privileges). The pre-login role enables trapping of the HTTP packets to the internal server IS running on the control entity CE.

In step S2, the internal server IS sends the captive portal login page to the communication device of the user, asking for credentials.

The user enters the credentials, such as user name and password, in the login page and submits the entered credentials that are sent from the communication device to the internal server IS.

In step S3, the internal server IS forwards the credentials to the control entity CE.

The control entity CE authenticates the user with collaboration with the Radius Server.

In step S4, if the authentication is successful, the role assignment engine RAE of the control entity CE sends a status page about the captive portal to the communication device of the user.

The status page contains a current user role defining user access privileges.

The status page contains also a cookie that commands the browser in the communication device to make a request to the control entity CE to get an updated user role.

The request is preferably periodic, in order to get a periodic update.

In step S5, the communication device sends a request to the control entity CE, based on the content of the cookie.

The cookie can send the request destined to a unique IP address (captive portal IP address) with the port number as 80 for example. The control entity CE has the capability to trap any HTTP packet destined to this captive portal IP address.

For example, the cookie in the status page forms request for the user role and sends to the captive portal IP address and with the destination port as 80 (HTTP port) at frequent interval (e.g. every 5 seconds).

In step S6, the role assignment engine RAE of the control entity CE sends a response to the request with updated role of the user to the communication device CD.

More especially, the control entity CE traps this cookie request and hands over to the internal web server for processing. The internal server forwards the cookies request to the role assignment engine on the control entity CE.

The role assignment engine RAE retrieves the current assigned role for this user and the internal server responds to the cookies request.

The information that can be provided are:
i. If the user is quarantined : it can tell the user about the remediation process.
ii. If the user is in restricted role due to the time policy: an additional information about the restrictions pertaining to this role and that can be shared with end user can be displayed.
iii. If the user is in restricted role due to the location policy: an additional information about the restrictions pertaining to this role and that can be shared with end user can be displayed.

In step S7, upon receiving the response from the control entity CE, the browser in the communication device displays in the status page if there is any change in the role.

The invention described here relates to a method and a device for enhancing captive portal service. According to one implementation of the invention, steps of the invention are determined by the instructions of a computer program incorporated into a control entity, such as the control entity CE. The program comprises program instructions which, when said program is loaded and executed within the control entity, carry out the steps of the method.

Consequently, the invention also applies to a computer program, particularly a computer program on or within an information medium, suitable to implement the invention. This program may use any programming language, and be in the form of source code, object code, or intermediate code between source code and object code, such as in a partially compiled form, or in any other form desirable for implementing the method according to the invention.

## Claims

1. A method for enhancing a captive portal service provided by a control entity (CE) to a communication device (CD), comprising the following steps in the control entity (CE):
after authentication of a user of the communication device, sending (S4) a status page about the captive portal to the communication device, the status page containing a user role defining current user access privileges and a cookie that commands a browser in the communication device to make at least one request to the control entity to get an updated user role,
receiving (S5) a request from the communication device based on the content of the cookie, retrieving (S6) an updated user role and sending (S6) a response to the received request with updated user role to the communication device (CD), wherein the response contains information about restrictions that pertains to the updated user role, if the user is in restricted role due to a time policy or a location policy.

2. A method according to claim 1, wherein the request is destined to a unique IP address and the control entity (CE) has the capability to trap any HTTP packet destined to this unique IP address.

3. A method according to claim 1 or 2, wherein the response contains information about a remediation process, if the user is quarantined.

4. A method according to any of claims 1 to 3, wherein the cookie commands the browser in the communication device to make periodic requests for updated user role.

5. A control entity (CE) for enhancing a captive portal service provided by the control entity (CE) to a communication device (CD), comprising:
means (RAE) for sending, after authentication of a user of the communication device, a status page about the captive portal to the communication device, the status page containing a user role defining current user access privileges and a cookie that commands a browser in the communication device to make at least one request to the control entity to get an updated user role,
means (RAE) for receiving a request from the communication device based on the content of the cookie, means (RAE) for retrieving an updated user role and sending a response to the received request with updated user role to the communication device (CD), wherein the response contains information about restrictions that pertains to the updated user role, if the user is in restricted role due to a time policy or a location policy.

6. A control entity (CE) according to claim 5, wherein the control entity is one of server, a router and a switch.

7. A computer program capable of being implemented within a control entity (CE) for enhancing a captive portal service provided by a control entity (CE) to a communication device (CD), said program comprising instructions which, when the program is loaded and executed within said control entity, carry out the following steps:
after authentication of a user of the communication device, sending (S4) a status page about the captive portal to the communication device, the status page containing a user role defining current user access privileges and a cookie that commands a browser in the communication device to make at least one request to the control entity to get an updated user role,
receiving (S5) a request from the communication device based on the content of the cookie, retrieving (S6) an updated user role and sending (S6) a response to the received request with updated user role to the communication device (CD), wherein the response contains information about restrictions that pertains to the updated user role, if the user is in restricted role due to a time policy or a location policy.

## Patentansprüche

1. Verfahren zum Verbessern eines Captive-Portal-Service, bereitgestellt von einer Steuerinstanz (CE) für ein Kommunikationsgerät (CD), umfassend die folgenden Schritte in der Steuerinstanz (CE):
Nach der Authentifizierung eines Benutzers des Kommunikationsgeräts, Senden (S4) einer Statusseite über das Captive-Portal an das Kommunikationsgerät, wobei die Statusseite eine Benutzerrolle, welche die die aktuellen Benutzerprivilegien definiert, und ein Cookie enthält, das einem Browser in dem Kommunikationsgerät befiehlt, mindestens eine Anforderung bei der Steuerinstanz zu stellen, um eine aktualisierte Benutzerrolle zu erhalten,
Empfangen (S5) einer Anforderung von dem Kommunikationsgerät auf Grundlage des Inhalts des Cookies,
Abrufen (S6) einer aktualisierten Benutzerrolle und Senden (S6) einer Antwort auf die empfangene Anforderung mit einer aktualisierten Benutzerrolle an das Kommunikationsgerät (CD), wobei die Antwort Information enthält über Beschränkungen, welche die aktualisierte Benutzerrolle betreffen, wenn sich der Benutzer in einer beschränkten Rolle befindet aufgrund einer Zeit- oder Ortsrichtlinie.

2. Verfahren nach Anspruch 1, wobei die Anforderung an eine eindeutige IP-Adresse gerichtet ist und die Steuerinstanz (CE) die Fähigkeit hat, jedes HTTP-Paket abzufangen, das an diese eindeutige IP-Adresse gerichtet ist.

3. Verfahren nach Anspruch 1 oder 2, wobei die Antwort Information enthält über einen Behebungsprozess, wenn der Benutzer gesperrt worden ist.

4. Verfahren nach einem beliebigen der Ansprüche 1 bis 3, wobei das Cookie dem Browser in dem Kommunikationsgerät befiehlt, periodische Anforderungen nach einer aktualisierten Benutzerrolle durchzuführen.

5. Steuerinstanz (CE) zum Verbessern eines Captive-Portal-Service, bereitgestellt von der Steuerinstanz (CE) für ein Kommunikationsgerät (CD), umfassend:
Mittel (RAE) zum Senden, nach der Authentifizierung eines Benutzers des Kommunikationsgeräts, einer Statusseite über das Captive-Portal an das Kommunikationsgerät, wobei die Statusseite eine Benutzerrolle enthält, welche die aktuellen Zugangsprivilegien und ein Cookie enthält, das einem Browser in dem Kommunikationsgerät befiehlt, mindestens eine Anforderung bei der Steuerinstanz zu stellen, um eine aktualisierte Benutzerrolle zu erhalten,
Mittel (RAE) zum Empfangen einer Anforderung von dem Kommunikationsgerät auf Grundlage des Inhalts des Cookies,
Mittel (RAE) zum Abrufen einer aktualisierten Benutzerrolle und Senden einer Antwort auf die empfangene Anforderung mit einer aktualisierten Benutzerrolle an das Kommunikationsgerät (CD), wobei die Antwort Information enthält über Beschränkungen, welche die aktualisierte Benutzerrolle betreffen, wenn sich der Benutzer in einer beschränkten Rolle befindet aufgrund einer Zeitrichtlinie oder Ortsrichtlinie.

6. Steuerinstanz (CE) nach Anspruch 5,
wobei die Steuerinstanz eines ist aus Server, Router und Schalter.

7. Ein Computerprogramm, das in der Lage ist, innerhalb einer Steuerinstanz (CE) implementiert zu werden, um einen Captive-Portal-Service zu verbessern, der von einer Steuerinstanz (CE) für ein Kommunikationsgerät (CD) bereitgestellt wird, wobei besagtes Programm Anweisungen umfasst, welche, wenn das Programm innerhalb besagter Steuerinstanz geladen und ausgeführt wird, die folgenden Schritte ausführt:
Nach der Authentifizierung eines Benutzers des Kommunikationsgeräts, Senden (S4) einer Statusseite über das Captive-Portal an das Kommunikationsgerät, wobei die Statusseite eine Benutzerrolle, welche die die aktuellen Benutzerprivilegien definiert, und ein Cookie enthält, das einem Browser in dem Kommunikationsgerät befiehlt, mindestens eine Anforderung bei der Steuerinstanz zu stellen, um eine aktualisierte Benutzerrolle zu erhalten,
Empfangen (S5) einer Anforderung von dem Kommunikationsgerät auf Grundlage des Inhalts des Cookies,
Abrufen (S6) einer aktualisierten Benutzerrolle und Senden (S6) einer Antwort auf die empfangene Anforderung mit einer aktualisierten Benutzerrolle an das Kommunikationsgerät (CD), wobei die Antwort Information enthält über Beschränkungen, welche die aktualisierte Benutzerrolle betreffen, wenn sich der Benutzer in einer beschränkten Rolle befindet aufgrund einer Zeitrichtlinie oder Ortsrichtlinie.

## Revendications

1. Procédé d'amélioration d'un service de portail captif fourni par une entité de commande (CE) à un dispositif de communication (CD), comprenant les étapes suivantes au sein de l'entité de commande (CE) :
après authentification d'un utilisateur du dispositif de communication, envoyer (S4) une page d'état concernant le portail captif au dispositif de communication, la page d'état contenant un rôle d'utilisateur définissant les privilèges d'accès utilisateur actuels et un cookie qui commande au navigateur du dispositif de communication de faire au moins une demande à l'entité de commande pour obtenir un rôle d'utilisateur actualisé,
recevoir (S5) une demande du dispositif de communication d'après le contenu du cookie,
récupérer (S6) un rôle d'utilisateur actualisé et envoyer (S6) une réponse à la demande reçue avec un rôle d'utilisateur actualisé au dispositif de communication (CD), la réponse contenant des informations sur les restrictions qui s'appliquent au rôle d'utilisateur actualisé, si l'utilisateur est dans un rôle restreint en raison d'une politique temporelle ou d'une politique de localisation.

2. Procédé selon la revendication 1, dans lequel la demande est destinée à une adresse IP unique et l'entité de commande (CE) a la capacité de piéger tout paquet http destiné à cette adresse IP unique.

3. Procédé selon la revendication 1 ou 2, dans lequel la réponse contient des informations sur un processus de remédiation, si l'utilisateur est en quarantaine.

4. Procédé selon l'une quelconque des revendications 1 à 3, dans lequel le cookie commande au navigateur du dispositif de communication de faire des demandes périodiques de rôle d'utilisateur actualisé.

5. Entité de commande (CE) destinée à améliorer un service de portail captif fourni par l'entité de commande (CE) à un dispositif de communication (CD), comprenant :
des moyens (RAE) pour envoyer, après authentification d'un utilisateur du dispositif de communication, une page d'état concernant le portail captif au dispositif de communication, la page d'état contenant un rôle d'utilisateur définissant les privilèges d'accès utilisateur actuels et un cookie qui commande à un navigateur du dispositif de communication de faire au moins une demande à l'entité de commande pour obtenir un rôle d'utilisateur actualisé,
des moyens (RAE) pour recevoir une demande du dispositif de communication d'après le contenu du cookie,
des moyens (RAE) pour récupérer un rôle d'utilisateur actualisé et envoyer une réponse à la demande reçue avec un rôle d'utilisateur actualisé au dispositif de communication (CD), la réponse contenant des informations sur les restrictions qui s'appliquent au rôle d'utilisateur actualisé, si l'utilisateur est dans un rôle restreint en raison d'une politique temporelle ou d'une politique de localisation.

6. Entité de commande (CE) selon la revendication 5, dans laquelle l'entité de commande est soit un serveur, soit un routeur, soit un commutateur.

7. Programme informatique pouvant être mis en oeuvre au sein d'une entité de commande (CE) pour améliorer un service de portail captif fourni par une entité de commande (CE) à un dispositif de communication (CD), ledit programme contenant des instructions qui, lorsque le programme est chargé et exécuté au sein de ladite entité de commande, réalise les étapes suivantes :
après authentification d'un utilisateur du dispositif de communication, envoyer (S4) une page d'état concernant le portail captif au dispositif de communication, la page d'état contenant un rôle d'utilisateur définissant les privilèges d'accès utilisateur actuels et un cookie qui commande au navigateur du dispositif de communication de faire au moins une demande à l'entité de commande pour obtenir un rôle d'utilisateur actualisé,
recevoir (S5) une demande du dispositif de communication d'après le contenu du cookie,
récupérer (S6) un rôle d'utilisateur actualisé et envoyer (S6) une réponse à la demande reçue avec un rôle d'utilisateur actualisé au dispositif de communication (CD), la réponse contenant des informations sur les restrictions qui s'appliquent au rôle d'utilisateur actualisé, si l'utilisateur est dans un rôle restreint en raison d'une politique temporelle ou d'une politique de localisation.
